# EUROPÄISCHE PATENTSCHRIFT

(11) **EP 0 960 777 B1**
(45) Veröffentlichungstag und Bekanntmachung des Hinweises auf die Patenterteilung: **18.05.2005**
(21) Anmeldenummer: 99108104.3
(22) Anmeldetag: 24.04.1999
(51) Int. Cl.: B60R 7/04, B60R 13/02

(54) **Fahrzeug mit einem Ablagefach**
Vehicle with a storage compartment
Véhicule avec compartiment de rangement

(30) Priorität: 30.05.1998 DE 19824467
(43) Veröffentlichungstag der Anmeldung: 01.12.1999
(73) Patentinhaber: Volkswagen Aktiengesellschaft, 38436 Wolfsburg (DE)
(72) Erfinder: Thill, Albert Dipl.-Ing., 38554 Weyhausen (DE); Wienert, Norbert Dipl.-Ing., 38518 Gifhorn (DE)

(56) Entgegenhaltungen:
- EP-A- 0 428 467
- WO-A-95/27634
- DE-A- 4 433 422
- DE-A- 19 504 894
- US-A- 4 752 096
- US-A- 5 702 144
- PATENT ABSTRACTS OF JAPAN vol. 1997, no. 07, 31. Juli 1997 (1997-07-31) & JP 09 086284 A (KASAI KOGYO CO LTD), 31. März 1997 (1997-03-31)
- WOOD JONATHAN, BURRELL LIONEL: "MGB The Illustrated History" 1988 , HAYNES PUBLISHING GROUP , SPARKFORD, GB XP002171554 * Seite 127; Abbildung UNTEN * * Seite 134; Abbildung UNTEN *

## Beschreibung

Die Erfindung betrifft ein Fahrzeug mit einem Ablagefach nach dem Oberbegriff des Anspruchs 1.

Um möglichst vielseitige Unterbringungsmöglichkeiten für Karten, Bücher oder andere Gegenstände in einem Kraftfahrzeug zu schaffen, werden Ablagefächer im Bereich der Instrumentenkonsole und an den Türverkleidungen vorgesehen. Dabei ist es auch allgemein bekannt, diese Ablagefächer mit aufklappbaren Deckeln zu versehen, die gegebenenfalls auch abschließbar ausgeführt sein können.

Die gattungsbildende US 4,752,096 beschreibt ein Ablagefach mit einem Deckel in einer Seitenwandverkleidung in einem Kofferraum eines Kraftfahrzeugs, wobei der Deckel als Entlüftungsöffnung zwischen dem Kofferraum und dem Ablagefach dient und zusätzlich eine Entlüftungsöffnung vom dem Ablagefach ins Freie vorhanden ist.

Aus der EP 0 428 467 A1 ist ein Ablagefach mit einem elektromechanischem Verriegelungsmechanismus in einer Innenverkleidung eines Kraftfahrzeugs bekannt. Das Ablagefach lässt sich dabei in seiner geschlossenen Stellung nur durch die Eingabe eines elektronischen Codes öffnen.

Die DE 195 04 894 A1 zeigt ein Ablagefach in einem Fahrzeug, bei dem der Hohlraum eines tragenden Rahmenteils des Fahrzeugs den Aufnahmeraum des Ablagefachs bildet. Der Hohlraum des Rahmenteils ist über eine von einem Deckel verschließbare Wandöffnung zugänglich.

Die WO 95/27634 A offenbart ein Ablagefach für Regenschirme, in einem Hohlraum, der in einer Fahrzeugtür zwischen einer Innenverkleidung und einer Außenwand der Fahrzeugtür gebildet wird.

In der US 5,702,144 ist ein Ablagefach mit einem aufsetzbaren Deckel in einer Hecktür oder einer Heckklappe beschrieben. In dem Ablagefach befinden sich Bänder, so dass in dem Ablagefach befindliche Gegenstände verzurrt und befestigt werden können und somit sicher gehalten werden.

Aus der DE 44 33 422 A1 ist eine als Tragetasche ausgebildete Tragebox bekannt, die an der Türinnenseite eines Fahrzeugs lösbar angebracht ist.

Des Weiteren ist zum Beispiel aus dem MGB (Baujahr 1967-1980) ein offenes Kartenfach an der Innenverkleidung im beifahrerseitigen Fußraum im Bereich der A-Säule bekannt. Dies ist beispielsweise auf den Seiten 127 und 134 in dem Buch "MGB The illustrated history" von Janathan Wood und Lionell Burrell, 1988 Haynes Publishing Group Sparkford, dargestellt.

Aufgabe der Erfindung ist es, ein Ablagefach im Innenraum eines Kraftfahrzeugs zu schaffen, das zur Unterbringung eines Bordbuchs oder anderer flacher Gegenstände geeignet und für den Fahrzeugführer oder einen Mitarbeiter des Servicepersonals jederzeit leicht erreichbar ist.

Diese Aufgabe wird mit den Merkmalen des Anspruchs 1 gelöst.

Gemäß Anspruch 1 befindet sich das Ablagefach im Bereich des fahrer- oder beifahrerseitigen Fußraums an der A-Säule un der Deckel bildet eine im Querschnitt L-förmige Haube, und dass bei geschlossenem Deckel dieser die dem Fußraum zugewandte Breitseite und die der angrenzenden Fahrzeugseitentür zugewandte Schmalseite des Ablagefachs abdeckt. Das Ablagefach befindet sich somit an einer Stelle der Innenverkleidung, die vom jeweils benachbarten Fahrzeugsitz aus verhältnismäßig leicht erreichbar ist. Bei geöffneter Fahrzeugseitentür ist das Ablagefach auch leicht von außen zugänglich, weshalb hier die Unterbringung eines Bordbuchs, des Kundendiensthefts oder entsprechender Unterlagen besonders vorteilhaft ist. Diese Unterlagen sind dann vom Servicepersonal leicht erreichbar, während sonstige Ablagefächer, wie beispielsweise das Handschuhfach, abgeschlossen bleiben können. Wird der haubenförmige Deckel geöffnet, so gewährt er bereits bei geringem Öffnungswinkel einen freien Zugriff zu der offenen Schmalseite und der offenen Breitseite des Ablagefachs, so dass ein bequemes Greifen eines darin abgelegten Gegenstands möglich ist. Außerdem kann der im Ablagefach einliegende Gegenstand von zwei Seiten eingesehen und somit leicht erkannt werden.

Besonders vorteilhaft ist es dabei, das Ablagefach mit einem Deckel zu versehen, der um eine zumindest annähernd vertikal verlaufende Schwenkachse verschwenkbar ist und dessen Öffnungsbereich zu der angrenzenden Fahrzeugseitentür ausgerichtet ist. Dies ermöglicht einen besonders problemlosen Zugriff bei geöffneter Fahrzeugseitentür von einer neben dem Fahrzeug stehenden Person oder von einer auf dem Fahrer- oder Beifahrersitz sitzenden Person. Bei geschlossenem Deckel ist außerdem sichergestellt, dass die im Ablagefach untergebrachten Gegenständen vor Beschädigung oder Verschmutzung sicher geschützt sind.

Um eine maximale Raumausnutzung für das Ablagefach zu erreichen, kann sich das Ablagefach über die gesamte Breite der Innenraumverkleidung der A-Säule erstrecken.

Der Deckel des Ablagefachs kann gemäß einer Weiterbildung der Erfindung mit einem an ihm abstehenden Rastelement in der geschlossenen Stellung in eine Rasteinrichtung lösbar einrasten. Dadurch wird insbesondere der um eine vertikale Achse verschwenkbare Deckel sicher in geschlossener Stellung gehalten. Anstelle einer Rastverbindung kann jedoch auch ein anderes Halteelement, beispielsweise ein Magnetverschluss, Verwendung finden.

Eine besonders vorteilhafte Ausbildung sieht vor, dass das Ablagefach einen für die Aufnahme des Bordbuchs oder für andere schmale Gegenstände geeigneten Aufnahmeraum hat, dessen vom Deckel abgedeckte Breitseite im Randbereich von Haltestegen begrenzt ist. Diese Haltestege sichern ein im Aufnahmeraum einliegendes Bordbuch oder einen anderen entsprechend schmalen Gegenstand vor dem Herausfallen bei geöffnetem Deckel, wodurch

insbesondere das Ablegen eines solchen schmalen Gegenstandes im Ablagefach wesentlich erleichtert wird.

Eine einfache und sichere Befestigung des Ablagefachs im vom Fußraum her zugänglichen Bereich der A-Säule erhält man dadurch, daß oben an dem Ablagefach eine Befestigungseinrichtung vorgesehen ist, mit der das Ablagefach an der A-Säule verschraubt oder in anderer Weise befestigt ist, während unten am Ablagefach eine Stützlasche absteht, die sich an einer am Teppichboden des Fahrzeugs ausgebildeten Wulst, Wölbung oder dergleichen abstützen kann. Die Stützlasche kann wie das gesamte Ablagefach aus einem elastischen Kunststoffmaterial bestehen. Die Stützlasche hat dabei nicht nur eine Befestigungsfunktion für das Ablagefach, sondern stellt gleichzeitig einen Teil der Innenverkleidung im Bereich zwischen dem Aufnahmeraum des Ablagefachs und dem im Fahrzeug ausgelegten Teppichboden dar.

Damit der Deckel des Ablagefachs zum Öffnen und Schließen bequem erfaßt werden kann, sieht eine Weiterbildung der Erfindung vor, daß an der zur angrenzenden Fahrzeugseitentür weisenden Schmalseite ein Eingriff zum Ergreifen des Deckels ausgebildet ist.

Hinter dem Ablagefach kann sich in der A-Säule der Aufnahmeraum für eine mehrere Steckverbindungen umfassende Koppelstation befinden. Wird das Ablagefach entfernt, erhält man einen freien Zugang zu dieser Koppelstation.

Anhand einer Zeichnung wird die Erfindung näher erläutert.

Es zeigen:
- Fig. 1: eine vereinfachte Teilansicht des Fahrzeuginnenraums mit einem an der rechten A-Säule angebrachten Ablagefach,
- Fig. 2: den Querschnitt eines an der rechten A-Säule eines Kraftfahrzeugs angebrachten Ablagefachs im Bereich eines im Deckelbereich vorgesehenen Eingriffs,
- Fig. 3: den Querschnitt eines an der rechten A-Säule angebrachten Ablagefachs im Bereich einer für den Deckel des Ablagefachs vorgesehenen Rasteinrichtung und
- Fig. 4: den Längsschnitt des Ablagefachs von Figur 3.

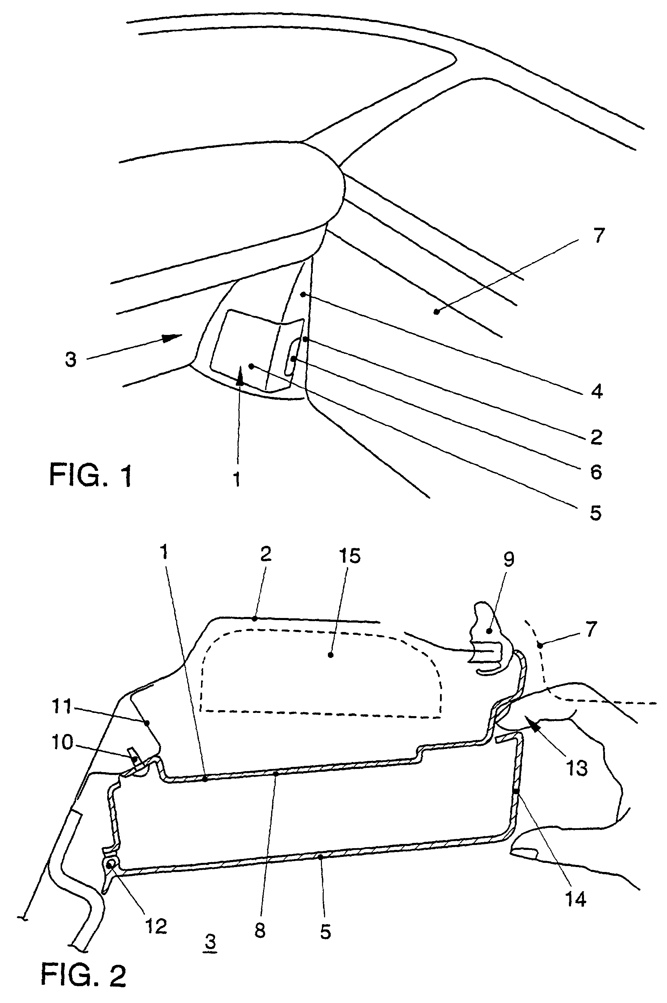

Die perspektivische Teilansicht des in Figur 1 ersichtlichen Fahrzeuginnenraums zeigt ein Ablagefach 1, das im unteren Bereich der rechten A-Säule 2 eines Kraftfahrzeugs als Teil der Innenverkleidung angeordnet ist. Das Ablagefach 1 bildet ein schmales Aufbewahrungsteil für insbesondere flache Gegenstände, welches im Fußraum 3 liegt und in der Innenverkleidung 4 der A-Säule 2 integriert ist. Das Ablagefach 1 besitzt einen im Querschnitt L-förmigen, als Haube ausgebildeten Deckel 5, dessen Schmalseite mit einem Eingriff 6 der benachbarten Fahrzeugseitentür 7 zugewandt ist.

In Figur 2 ist der Querschnitt eines solchen Ablagefachs 1 mit haubenförmigem Deckel 5 detaillierter dargestellt. Die Rückwand 8 des Ablagefachs 1 ist einerseits über ein Verbindungselement 9 und andererseits über eine Schraube 10 und ein Trägerblech 11 mit der A-Säule 2 fest verbunden. Die an die A-Säule 2 angrenzende Fahrzeugseitentür 7 ist mit unterbrochener Linie angedeutet.

Der Deckel 5 ist über ein Schwenklager 12, dessen Schwenkachse im wesentlichen vertikal verläuft, schwenkbar gelagert. Ein Eingriff 13 ermöglicht ein bequemes Ergreifen des Deckels 5 an seiner Schmalseite 14, um ihn aus der dargestellten geschlossenen Stellung in eine geöffnete Stellung zu verschwenken.

Hinter dem Ablagefach 1 befindet sich in dem von der A-Säule 2 umschlossenen Hohlraum ein Koppelfeld 15, das hier mit unterbrochenen Linien angedeutet ist. Das Koppelfeld 15 kann aus einer Vielzahl von Kabelsteckverbindungen bestehen.

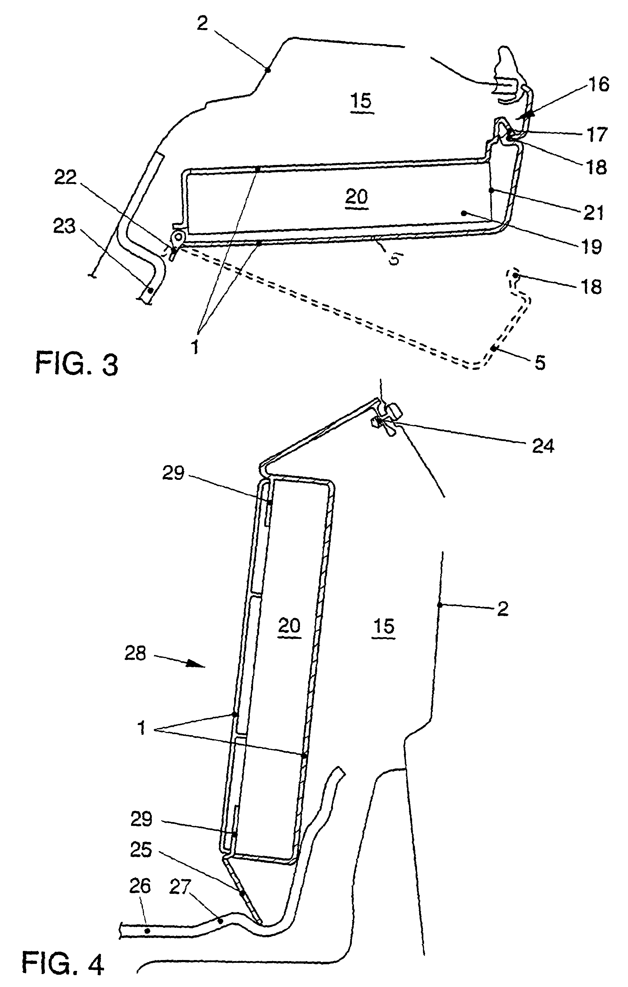

Der in Figur 3 dargestellte Querschnitt des Ablagefachs 1 verläuft durch eine Rasteinrichtung 16, die den Deckel 5 in der geschlossenen Stellung lösbar festhält. Die Rasteinrichtung 16 besitzt zu diesem Zweck Federelemente 17, die ein am Deckel 5 angeformtes Rastelement 18 federelastisch umschließen.

Mit unterbrochenen Linien ist die Offenstellung des Deckels 5 dargestellt. Dabei wird ersichtlich, daß bereits bei geringem Öffnungswinkel ein im Aufnahmeraum 19 des Ablagefachs 1 einliegender Gegenstand 20 an seiner Schmalseite 21 bequem erfaßt werden kann.

Der Deckel 5 besitzt im Bereich seines Schwenklagers 12 einen Fortsatz 22, der den Spalt zwischen Deckel 5 und der seitlich angrenzenden Innenverkleidung 23 schließt.

Der in Figur 4 gezeigte Längsschnitt des Ablagefachs 1 zeigt eine am oberen Ende des Ablagefachs 1 vorgesehene Befestigungseinrichtung 24, mit der diese an der A-Säule 2 befestigt ist. Am unteren Ende ist an dem Ablagefach 1 eine Stützlasche 25 vorgesehen, die sich an einer am Teppichboden 26 des Fahrzeugs ausgebildeten Wulst 27 abstützt.

Der im Aufnahmeraum des Ablagefachs 1 einliegende Gegenstand 20 kann beispielsweise das Bordbuch des Kraftfahrzeugs sein. Damit dieses auch bei geöffnetem Deckel 5 nicht seitlich herausfallen kann, sind im Randbereich der deckelseitigen Breitseite 28 Haltestege 29 vorgesehen, die im oberen und unteren Bereich den Aufnahmeraum des Ablagefachs 1 begrenzen und ein beispielsweise einliegendes Bordbuch seitlich abstützen.

## Patentansprüche

1. Fahrzeug mit einem Ablagefach (1) zum Ablegen von Gegenständen in einem Fahrzeug mit einem verschwenkbaren Deckel (5), der als Teil der Innenverkleidung (4) ausgebildet ist, **dadurch gekennzeichnet, dass**
das Ablagefach (1) im Bereich des fahrer- oder beifahrerseitigen Fußraums (3) an der A-Säule (2) angeordnet ist und dass der Deckel (5) eine im Querschnitt L-förmige Haube bilde, und dass bei geschlossenem Deckel (5) dieser die dem Fußraum (3) zugewandte Breitseite (28) und die der angrenzenden Fahrzeugseitentür (7) zugewandte Schmalseite (14) des Ablagefachs (1) abdeckt.

2. Fahrzeug (1) nach Anspruch 1, **dadurch gekennzeichnet, dass** der Deckel um eine zumindest annähernd vertikal verlaufende Schwenkachse verschwenkbar ist.

3. Fahrzeug (1) nach einem der Ansprüche 1 oder 2, **dadurch gekennzeichnet, dass** sich die Öffnung des Ablagefachs (1) an ihrer der angrenzenden Fahrzeugseitentür (7) zugewandten Seite befindet.

4. Fahrzeug (1) nach einem der vorhergehenden Ansprüche, **dadurch gekennzeichnet, dass** sich das Ablagefach (1) über die gesamte Breite der Innenverkleidung (4) der A-Säule (2) erstreckt.

5. Fahrzeug (1) nach einem der vorhergehenden Ansprüche, **dadurch gekennzeichnet, dass** das Ablagefach (1) eine Rasteinrichtung (16) hat, in die der Deckel (5) mit einem an ihm abstehenden Rastelement (18) in der geschlossenen Stellung lösbar einrastet.

6. Fahrzeug (1) nach einem der vorhergehenden Ansprüche, **dadurch gekennzeichnet, dass** das Ablagefach (1) einen für die Aufnahme des Bordbuchs oder für schmale Gegenstände geeigneten Aufnahmeraum hat, dessen vom Deckel (5) abgedeckte Breitseite (28) im Randbereich von Haltestegen (29) begrenzt ist.

7. Fahrzeug (1) nach einem der vorhergehenden Ansprüche, **dadurch gekennzeichnet, dass** oben am Ablagefach (1) eine Befestigungseinrichtung (24) vorgesehen ist, mit der das Ablagefach (1) an der A-Säule (2) befestigt ist, und dass unten am Ablagefach (1) eine nach unten gerichtete Stützlasche (25) absteht, die sich an einer am Teppichboden (26) des Fahrzeugs ausgebildeten Wulst (27) oder dergleichen Kontur abstützt.

8. Fahrzeug (1) nach einem der vorhergehenden Ansprüche, **dadurch gekennzeichnet, dass** an der zur angrenzenden Fahrzeugseitentür (7) weisenden Schmalseite (14) ein Eingriff (13) zum Ergreifen des Deckels (5) ausgebildet ist.

9. Fahrzeug (1) nach einem der vorhergehenden Ansprüche, **dadurch gekennzeichnet, dass** das Ablagefach (1) eine in der A-Säule (2) untergebrachte Koppelstation (15) abdeckt.

## Claims

1. Vehicle with a storage compartment (1) for storing objects in a vehicle, having a pivotable cover (5) which is designed as part of the interior lining (4), **characterized in that** the storage compartment (1) is arranged on the A-pillar (2) in the region of the driver's or front-passenger's footwell (3), and **in that** the cover (5) forms a hood which is L-shaped in cross section, and **in that**, when the cover (5) is closed, it covers the wide side (28) of the storage compartment (1), which side faces the footwell (3), and the narrow side (14) of the storage compartment (1), which side faces the adjacent vehicle side door (7).

2. Vehicle (1) according to Claim 1, **characterized in that** the cover can be pivoted about a pivot axis running at least approximately vertically.

3. Vehicle (1) according to either of Claims 1 and 2, **characterized in that** the opening of the storage compartment (1) is situated on its side facing the adjacent vehicle side door (7).

4. Vehicle (1) according to one of the preceding claims, **characterized in that** the storage compartment (1) extends over the entire width of the interior lining (4) of the A-pillar (2).

5. Vehicle (1) according to one of the preceding claims, **characterized in that** the storage compartment (1) has a latching device (16) into which, in the closed position, the cover (5) releasably latches by means of a latching element (18) protruding on it.

6. Vehicle (1) according to one of the preceding claims, **characterized in that** the storage compartment (1) has a receiving space which is suitable for receiving the logbook or for narrow objects and the wide side (28) of which, which is covered by the cover (5), is bounded in the edge region by retaining webs (29).

7. Vehicle (1) according to one of the preceding claims, **characterized in that** a fastening device (24) is provided at the top of the storage compartment (1) and is used to fasten the storage compartment (1) to the A-pillar (2), and **in that** a downwardly directed supporting tab (25) protrudes at the bottom of the storage compartment (1) and is supported on a bead (27) or similar contour formed on the fitted carpet (26) of the vehicle.

8. Vehicle (1) according to one of the preceding claims, **characterized in that** a grip (13) is formed on the narrow side (14), which faces the adjacent vehicle side door (7), for grasping the cover (5).

9. Vehicle (1) according to one of the preceding claims, **characterized in that** the storage compartment (1) covers a coupling station (15) accommodated in the A-pillar (2).

## Revendications

1. Véhicule avec un compartiment de rangement (1) pour ranger des objets dans le véhicule, compartiment qui est équipé d'un couvercle pivotant (5) conçu comme élément de l'habillage intérieur (4), **caractérisé en ce que** le compartiment de rangement (1) est disposé sur le montant A (2) dans la région de l'espace pour les pieds (3) côté conducteur ou côté passager avant, **en ce que** le couvercle (5) forme un capot à section en forme de L, et **en ce que**, lorsque le couvercle (5) est fermé, ce dernier recouvre le côté large (28), tourné vers l'espace pour les pieds (3), et le côté étroit (14), tourné vers la porte latérale voisine (7) du véhicule, du compartiment de rangement (1).

2. Véhicule selon la revendication 1, **caractérisé en ce que** le couvercle peut pivoter autour d'un axe de pivotement s'étendant au moins approximativement verticalement.

3. Véhicule selon la revendication 1 ou 2, **caractérisé en ce que** l'ouverture du compartiment de rangement (1) se trouve sur son côté tourné vers la porte latérale voisine (7) du véhicule.

4. Véhicule selon l'une des revendications précédentes, **caractérisé en ce que** le compartiment de rangement (1) s'étend sur toute la largeur de l'habillage intérieur (4) du montant A (2).

5. Véhicule selon l'une des revendications précédentes, **caractérisé en ce que** le compartiment de rangement (1) possède un moyen d'enclenchement (16) dans lequel le couvercle (5) s'enclenche de manière amovible dans la position fermée par un élément d'enclenchement (18) faisant saillie sur lui.

6. Véhicule selon l'une des revendications précédentes, **caractérisé en ce que** le compartiment de rangement (1) possède un espace récepteur convenant pour recevoir le carnet d'entretien ou pour des objets étroits, espace dont le côté large (28) recouvert par le couvercle (5) est limité dans la région de bord par des nervures de maintien (29).

7. Véhicule selon l'une des revendications précédentes, **caractérisé en ce qu'**un moyen de fixation (24), par lequel le compartiment de rangement (1) est fixé sur le montant A (2), est prévu sur le dessus du compartiment de rangement (1), et **en ce qu'**une patte de soutien (25) dirigée vers le bas fait saillie sur le dessous du compartiment de rangement (1), patte qui s'appuie sur un bourrelet (27) ou contour analogue formé sur la moquette (26) du véhicule.

8. Véhicule selon l'une des revendications précédentes, **caractérisé en ce qu'**une poignée en creux (13) destinée à saisir le couvercle (5) est configurée sur le côté étroit (14) tourné vers la porte latérale voisine (7) du véhicule.

9. Véhicule selon l'une des revendications précédentes, **caractérisé en ce que** le compartiment de rangement (1) recouvre un poste de couplage (15) situé dans le montant A (2).
